# EUROPÄISCHE PATENTSCHRIFT

(11) **EP 2 158 621 B1**
(45) Veröffentlichungstag und Bekanntmachung des Hinweises auf die Patenterteilung: **20.10.2010**
(21) Anmeldenummer: 08736464.2
(22) Anmeldetag: 22.04.2008
(51) Int. Cl.: H01L 41/09, G01P 1/08

(54) **ELEKTROMECHANISCHER MOTOR, INSBESONDERE PIEZOELEKTRISCHER MIKROSCHRITTANTRIEB**
ELECTROMECHANICAL MOTOR, ESPECIALLY PIEZOELECTRIC MICROSTEPPER DRIVE
MOTEUR ÉLECTROMÉCANIQUE, NOTAMMENT MOTEUR PAS À PAS PIÉZOÉLECTRIQUE

(30) Priorität: 18.05.2007 DE 102007023199
(43) Veröffentlichungstag der Anmeldung: 03.03.2010
(73) Patentinhaber: Continental Automotive GmbH, 30165 Hannover (DE)
(72) Erfinder: BLUME, Heinrich-Jochen, 64291 Darmstadt (DE); GOTTLIEB, Bernhard, 81739 München (DE); KAPPEL, Andreas, 85649 Brunnthal (DE); KISSEL, Robert Wolfgang, 63329 Egelsbach (DE); MITTENBÜHLER, Karl-Heinz, 64347 Griesheim (DE); SCHWEBEL, Tim, 80337 München (DE); WALLENHAUER, Carsten, 01987 Schwarzheide (DE)
(86) Internationale Anmeldenummer: PCT/EP2008/054870
(87) Internationale Veröffentlichungsnummer: WO 2008/141882

(56) Entgegenhaltungen:
- EP-A- 1 098 429
- WO-A-2007/144277
- WO-A-2008/034651
- DE-A1- 1 906 946
- DE-A1- 10 244 432
- JP-A- 3 273 871
- JP-A- 60 180 481
- US-A- 4 019 073
- US-A- 5 079 471
- HAYASHI I ET AL: "Development of piezoelectric cycloid motor" 19910101, 1. Januar 1991 (1991-01-01), Seiten 2/1-2/3, XP006521527

## Beschreibung

Die vorliegende Erfindung betrifft einen elektromechanischen Motor, insbesondere einen piezoelektrischen Stellantrieb.

Das Cockpit eines Kraftfahrzeugs versucht ein optimales Zusammenspiel von Design und Technik zu realisieren. Im Blickfeld des Fahrers liegen dabei verschiedene Zeigerinstrumente. Diese Zeigerinstrumente müssen sowohl unterschiedlichen technischen Anforderungen genügen als auch einen konkurrenzfähigen Preis für die Massenproduktion von Kraftfahrzeugen besitzen. Ein Beispiel für ein derartiges Zeigerinstrument ist das "Messwerk 2000" der Firma Siemens VDO.

Das "Messwerk 2000" basiert auf einem mit einem einstufigen Schneckenradgetriebe untersetzten Schrittmotorantrieb. Der vierpolige Schrittmotor wird durch zwei um 90° im Phasenwinkel zueinander phasenverschobene sinusartige Spulenstromverläufe als Funktion der Zeit angesteuert. Das Vorzeichen der Phasenverschiebung bestimmt die Drehrichtung und die Frequenz die Drehgeschwindigkeit der Motorwelle. Im Rahmen einer vollen Periode von 360° der sinusartigen Stromverläufe können bis zu 128 Zwischenstufen reproduzierbar eingestellt werden. Die Nutzung dieser Zwischenstufen wird als Mikroschrittbetrieb bezeichnet.

Ein kompletter Stellantrieb "Messwerk 2000", der den oben charakterisierten Schrittmotor beinhaltet, besteht aus zwölf Einzelteilen. Der Schrittmotor selbst setzt sich aus zwei Spulen mit einem gemeinsamen Statorblech und einem Permanentmagnetrotor zusammen. Hinsichtlich der Bauteilkosten schlagen die Spulen und der Permanentmagnet am stärksten zu Buche. Entscheidend für den Preis sind neben den Materialkosten ebenfalls die Herstellungskosten, die näherungsweise proportional zur Anzahl der Komponenten des Stellantriebs zunehmen. Aus der EP 1 098 429 B1 ist ein nach einem neuen Motorprinzip, das heißt ohne rotierende Spulen, arbeitender elektromechanischer Motor bekannt, bei dem während des Betriebs durch eine zeitlich versetzte Betätigung von mindestens zwei elektromechanischen Antriebselementen ein Antriebsring umlaufend verschoben wird, so dass durch einen unmittelbaren Kraftübertrag vom Antriebsring auf die - insbesondere innerhalb des Antriebsrings befindliche - Welle diese gedreht wird. Die umlaufenden Verschiebebewegungen des Antriebsrings können durch einen z. B. piezoelektrisch, magnetostriktiv, elektrostriktiv oder elektrodynamisch angetriebenen Aktor hervorgerufen werden, so dass ein hinsichtlich der Materialkosten und Herstellungskosten besser für die Massenproduktion geeigneter Stellantrieb resultiert. Die Piezoaktoren werden so am Antriebsring angebracht, dass ihr jeweiliger Hub radial auf den Antriebsring wirkt, wobei gegebenenfalls noch weitere Maßnahmen ergriffen werden, um eine möglichst symmetrische Krafteinleitung auf den Antriebsring zu erreichen.

Unter den zuletzt genannten technischen Umständen ergibt sich zwar ein hinsichtlich der Funktion optimierter Antrieb mit besten Gleichlaufeigenschaften (Konstanz der Drehgeschwindigkeit unabhängig von der momentanen Stellung der Welle) ohne Drehmomentschwankungen. Insbesondere die Längserstreckung und die radiale Anordnung der Biegeaktoren bringt es dabei jedoch mit sich, dass die ebenen Antriebsvarianten einen erheblichen Platzbedarf in der Ebene erfordern und zumeist wenig kompakt erscheinen. Kompakte ebene Antriebe werden aber aufgrund der in Cockpitinstrumenten vorgegebenen sehr beengten Bauraumverhältnisse dringend benötigt.

Die Aufgabe der vorliegenden Erfindung besteht darin, einen hinsichtlich Teilezahl, Fertigungsaufwand, Bauraumbedarf und Funktionalität optimierten Schrittantrieb, insbesondere einen Kleinstellantrieb für Messwerke von Cockpitinstrumenten, bereitzustellen.

Diese Aufgabe wird durch einen elektromechanischen Motor, insbesondere einen piezoelektrischen Mikroschrittmotor, gemäß Patentanspruch 1 gelöst. Vorteilhafte Ausgestaltungen und Weiterentwicklungen der vorliegenden Erfindung gehen aus der folgenden Beschreibung, den Zeichnungen und den abhängigen Ansprüchen hervor.

Der erfindungsgemäße elektromechanische Schrittantrieb weist die folgenden Merkmale auf:
Zwei elektromechanische, vorzugsweise piezoelektrische, Antriebselemente (Aktoren), die annähernd senkrecht zueinander ausgerichtete Wirkrichtungen aufweisen, und eine in einem Antriebsring derart drehbar gelagerte Welle, dass der Antriebsring durch eine Auslenkung der piezoelektrischen Antriebselemente in die jeweilige Wirkrichtung zu einer unmittelbar auf die Welle übertragbaren Verschiebebewegung anregbar ist, so dass die Welle im Antriebsring abrollt und dadurch rotiert. Weiterhin sind ein annähernd rechtwinkliger steifer Rahmen und ein den Rahmen U-förmig umfassender Außenrahmen mit U-Schenkeln und mit einem annähernd parallel zu einer der beiden Wirkrichtungen angeordneten Basiselement vorgesehen, so dass der mit den Enden der U-Schenkel verbundene Rahmen nahezu kräftefrei relativ zum Basiselement in Form einer Scherung in die zum Basiselement parallele Wirkrichtung verschiebbar ist, wobei außerdem der innerhalb des Rahmens angeordnete und über annähernd parallel zum Basiselement angeordnete Stabelemente an den Rahmen angebundene Antriebsring relativ zum Rahmen in Form einer Scherung in die zum Basiselement senkrechte Wirkrichtung verschiebbar ist. Dabei ist das zur parallelen Wirkrichtung gehörige Antriebselement an den Rahmen und das zur senkrechten Wirkrichtung gehörige Antriebselement an den Antriebsring angelenkt.

Die erfindungsgemäße Gesamtstruktur mit drei rahmenförmig ineinander geschachtelten Elementen - Antriebsring, Rahmen und Außenrahmen - verwirklicht aufgrund der spezifischen, teils starren, teils scherflexiblen, aber insgesamt torsionssteifen Anbindung der Elemente bzw. ihrer Teile eine 'Rahmenkinematik', bei der, im Gegensatz zum Stand der Technik, nicht mehr auf die radiale Krafteinleitung der durch die Biegeaktoren bereitgestellten Kräfte in den Antriebsring bezüglich des Mittelpunktes der Ringbohrung geachtet werden muss, da das durch die nichtradiale, exzentrische Krafteinleitung hervorgerufene Drehmoment auf den Antriebsring durch die Gesamtstruktur und deren Fixierung an einer ihrer Ecken, beispielsweise in einem Gehäuse, im Wesentlichen torsionsfrei aufgenommen wird. Dies eröffnet die Möglichkeit einer platzsparenden Anordnung der Antriebselemente, insbesondere entlang der Außenseiten der beispielsweise annähernd quadratischen rahmenförmigen Gesamtstruktur. Dadurch ist ein sehr kompakter, bauraumsparender Aufbau des Schrittantriebes realisierbar. Der erfindungsgemäße Schrittantrieb zeichnet sich weiterhin durch eine sehr geringe Anzahl von einfachen Bauteilen aus, so dass der für die Massenproduktion besonders geeignet ist. Ferner wird eine aufgrund unterschiedlicher Wärmedehnung von Kunststoff und Aktor auftretende thermische Verstimmung des Antriebs konstruktiv sicher abgefangen. Durch Formschluss, z. B. mittels einer zwischen Antriebsring und Welle ausgebildeten Verzahnung, wird eine sehr hohe Stellgenauigkeit des erfindungsgemäßen Antriebs im rein gesteuerten Betrieb erreicht, ohne Sensoren und einen Regelkreis in Anspruch nehmen zu müssen.

Erfindungsgemäß wird - zugunsten der Optimierung der Kompaktheit - keine unbedingt vollkommene symmetrische Krafteinleitung auf den Antriebsring angestrebt. Die sich hinsichtlich der Funktion daraus gegebenenfalls ergebenden Konsequenzen, z. B. leichte Gleichlauf- und Drehmomentschwankungen, können durch weitere Maßnahmen soweit reduziert werden, dass die Kundenspezifikationen weiterhin eingehalten werden. Insbesondere können kleine Drehmomente durch eine den reinen Sinusverlauf modulierende Ansteuerung der Antriebselemente ausgeglichen werden.

Bei einer besonders vorteilhaften Ausführungsform der Erfindung ist die Aufteilung der Scherfähigkeit auf die drei Elemente bzw. ihre Anbindung relativ zueinander dadurch realisiert, dass die U-Schenkel des Außenrahmens jeweils mittels Festkörpergelenken an das Basiselement und an den Rahmen angebunden sind, und dass die Stabelemente ebenfalls jeweils mittels Festkörpergelenken an den Antriebsring und an eines der beiden senkrecht zum Basiselement angeordneten Rahmenelemente des Rahmens angebunden sind. Die paarweise in etwa parallele Anordnung der Stabelemente und der U-Schenkel des Außenrahmens hat zur Folge, dass der Antriebsring relativ zum Rahmen, und der Rahmen relativ zum Basiselement des Außenrahmens leicht (d. h. nahezu kräftefrei) scheren kann. Einer Torsion hingegen setzt die so ausgebildete rahmenförmige Gesamtstruktur hohen Widerstand entgegen.

Die Festkörpergelenke können jeweils durch eine Verjüngung des Querschnittes der Stabelemente und der U-Schenkel des Außenrahmens in einem kurzen Abschnitt gebildet sein, was insbesondere fertigungstechnisch von Vorteil ist.

Zur Krafteinleitung ist am Antriebsring mindestens ein Zapfen zur starren Befestigung jeweils eines senkrecht zum Basiselement angeordneten Bügelelements integriert, wobei am entgegengesetzten Ende des Bügelelements das zur senkrechten Wirkrichtung gehörige Antriebselement angreift. Der bei der erfindungsgemäßen Gesamtstruktur geometrisch erforderliche Angriff der senkrechten Wirkrichtung bzw. des zugehörigen Antriebselements im Inneren der rahmenförmigen Gesamtstruktur, nämlich am Antriebsring selbst, kann also auf fertigungstechnisch einfache Weise realisiert werden.

Hinsichtlich der Krafteinleitung bezüglich der "parallelen Wirkrichtung" ist eine Ausführungsform von besonderem Vorteil, bei der die Anbindung des Endes eines der beiden U-Schenkel des Außenrahmens an den Rahmen als Rahmenecke ausgebildet ist, an die ein Zug-Druckstab angebunden ist, der außerhalb und parallel zu dem die Enden der U-Schenkel verbindenden Rahmenelement angeordnet ist und sich mit seinem freien Ende bis über das zur Rahmenecke entgegengesetzte Ende des Rahmenelements hinaus erstreckt, wobei am freien Ende des Zug-Druckstabs das zur parallelen Wirkrichtung gehörige Antriebselement angreift.

Gemäß einer Weiterbildung der beiden letztgenannten Ausführungsformen können ferner der Zug-Druckstab und/oder das Bügelelement jeweils zu jedem ihren beiden Enden hin ein Festkörpergelenk aufweisen. Durch diese scherflexible Anlenkung der beiden elektromechanischen, vorzugsweise piezoelektrischen, Antriebselemente an den Antriebsring ergibt sich der Vorteil, dass ihre Bewegungsrichtungen entkoppelt voneinander sind, so dass sich die Antriebselemente in ihrer Bewegung nicht oder vernachlässigbar gering behindern. Bei der Krafteinleitung treten also keine Verlustenergien auf.

Die zwei elektromechanischen Antriebselemente können besonders vorteilhaft als Biegewandler, vorzugsweise piezoelektrische Biegewandler, ausgestaltet sein.

Derartige Festkörper-Biegeaktoren auf Basis piezoelektrischer Keramikwerkstoffe werden in verschiedenartigen Bauformen seit vielen Jahren vielseitig in der Industrie eingesetzt. Sie zeichnen sich durch eine kleine Bauform, einen niedrigen Energiebedarf und eine hohe Zuverlässigkeit aus. So zeigt beispielsweise ein piezoelektrischer Biegeaktor eine Lebensdauer von mindestens 10⁹ Zyklen im industriellen Umfeld. Die in einem Kleinstellantrieb für beispielsweise Zeigerinstrumente zum Einsatz kommenden Biegewandler werden typischerweise so dimensioniert, dass sie an ihrem bewegten Ende eine freie Auslenkung im Bereich von ca. 0,2 mm bis 2 mm aufweisen. Zudem wird im Fall der Auslenkungsblockierung des frei bewegbaren Endes des Biegewandlers eine Blockierkraft im Bereich von 0,5 N bis 2 N erreicht. Die näherungsweise geradlinige Auslenkung der Biegewandler erfolgt jeweils transversal bezogen auf ihre größte Längserstreckung. Die Richtung der Auslenkung, die der Wirkrichtung des Biegewandlers entspricht, ist somit annähernd orthogonal zur Längsachse des Biegewandlers.

Eine besonders kompakte Variante des erfindungsgemäßen Schrittantriebs ergibt sich durch eine Anordnung, bei der das Basiselement des Außenrahmens an einem seiner Endbereiche starr an ein in einem Gehäuse fixierbares Fixierelement gekoppelt ist, das zwei Aufnahmen aufweist, die jeweils zur steifen Befestigung eines Biegewandlers an seinem ruhenden Ende vorgesehen sind, so dass je ein Biegewandler seitlich außerhalb des Basiselements bzw. eines der U-Schenkel des Außenrahmens angeordnet ist.

Gemäß einer Weiterbildung der letztgenannten Ausführungsform ist es vorteilhaft, den Rahmen mit Antriebsring, den Außenrahmen und das Fixierelement zusammen als ein einstückig in Kunststoffspritzgusstechnik gefertigtes Antriebsmodul auszubilden, wobei die Biegewandler mit in das Antriebsmodul eingespritzt sind. Die Realisierung des Antriebsmoduls in Kunststoffspritzgusstechnik ist einfach und kostengünstig, wobei durch die Einbeziehung der Biegeaktoren in den Einspritz-Arbeitsgang die Anzahl der Fertigungsschritte noch weiter reduziert wird.

Zur steifen Lagerung des Antriebsmoduls bzw. zur drehbaren Lagerung der zugehörigen Welle ist es vorteilhaft, ein annähernd quaderförmiges Gehäuse mit einem Deckel vorzusehen, wobei im Gehäuse ein zentraler Lagerblock mit einer Anlagefläche und mit einer ersten Lagerbohrung und im Deckel eine zweite Lagerbohrung für die Welle vorgesehen ist, und wobei ein zur Fixierung vorgesehenes, starr am Basiselement angekoppeltes Fixierelement derart in einer Gehäuseecke angeordnet und steif und dauerfest fixiert ist, dass die mindestens eine zylindrische Abrollfläche der Welle in einer zugehörigen Abrollfläche einer Ringbohrung des Antriebsringes abrollen kann.

Die bevorzugten Ausführungsformen der vorliegenden Erfindung werden unter Bezugnahme auf die begleitende Zeichnung näher erläutert. Es zeigen:
Fig. 1A und 1B eine Ausführungsform eines Antriebsmoduls für den erfindungsgemäßen Schrittantrieb jeweils in Draufsicht bzw. in perspektivischer Ansicht,
Fig. 2A und 2B, jeweils in gleicher Ansicht wie Fig. 1, das dortige Antriebsmodul, jedoch mit eingesetzten Biegeaktoren und mit Bügelelementen,
Fig. 3 eine Draufsicht auf das Bügelelement gemäß Figur 2,
Fig. 4A und 4B, jeweils in gleicher Ansicht wie Fig. 1, ein Gehäuse zur Lagerung der Welle und des Antriebsmoduls,
Fig. 5A und 5B, jeweils in gleicher Ansicht wie Fig. 1, einen zum Gehäuse gemäß Figur 4 passenden Deckel,
Fig. 6A und 6B, jeweils in gleicher Ansicht wie Fig. 1, einen Teilzusammenbau des erfindungsgemäßen Schrittantriebs,
Fig. 7A und 7B, jeweils in gleicher Ansicht wie Fig. 1, eine Ansicht einer Bügelfeder,
Fig. 8A und 8B, jeweils in gleicher Ansicht wie Fig. 1, eine Welle für den erfindungsgemäßen Schrittantrieb,
Fig. 9 einen axialen Querschnitt entlang der z-Achse durch den Antrieb im zusammengebauten Zustand.

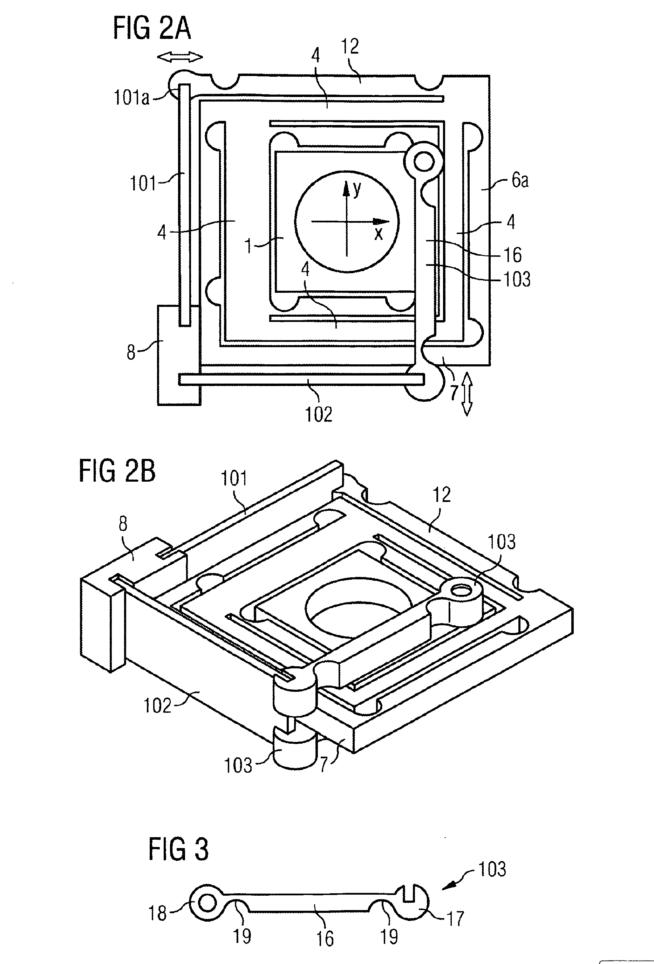

Erfindungsgemäß wird ein piezoelektrischer Schrittmotor vorgestellt, der es erlaubt, durch eine Überlagerung geeigneter periodischer Linearbewegungen der Biegewandler eine kontinuierliche und gleichförmige Rotation zu erzeugen. Zu diesem Zweck werden die Biegewandler 101, 102, vgl. Figur 2, mittels einer eine Scherflexibilität in der x-y-Ebene gewährleistenden, geschachtelten rahmenförmigen Gesamtstruktur, in der die erfindungsgemäße Rahmenkinematik implementiert ist, derart an einen flachen Antriebsring 1 angekoppelt, dass dieser entlang der zueinander senkrechten Wirkrichtungen x und y der Biegewandler 101, 102 (vgl. Figur 2) translatierbar ist. Der rechteckige Rahmen 4 zusammen mit dem Antriebsring 1, dem U-förmigen Außenrahmen 6, dem Fixierelement 8 und, gegebenenfalls, den integrierten Biegewandlern 101, 102, wird im Folgenden als 'Antriebsmodul' bezeichnet. Das Antriebsmodul ist mit Hilfe einer Spritzgusstechnik aus Polyethylen, Spritzguss-Kunststoff, POM oder aus anderen geeigneten Werkstoffen herstellbar.

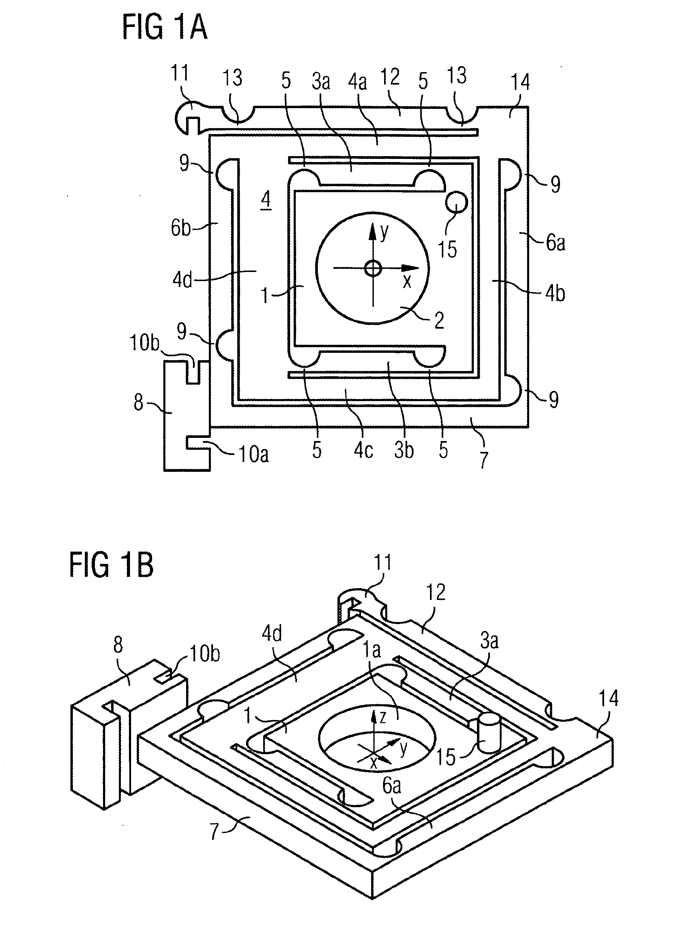

Figur 1 zeigt das Antriebsmodul in der Draufsicht und in der Perspektive. Es besteht aus einem Antriebsring 1, der eine zylindrische Ringbohrung 2 enthält, deren Achse z. B. mit der z-Achse eines kartesischen Koordinatensystems zusammenfällt, dessen x-y-Ebene sich parallel zur Blattebene erstreckt. Der Antriebsring 1 ist mittels zweier in etwa zueinander parallel verlaufender und in ihrer Längserstreckung in etwa parallel zur x-Richtung ausgerichteter Stabelemente (Zug-Druckstäbe) 3a, 3b mit einem mechanisch hinreichend steifen, in etwa rechtwinkeligen und in etwa parallel zur x- bzw. y-Richtung ausgerichteten Rahmen 4, bestehend aus vier Rahmenelementen 4a, 4b, 4c, 4d, verbunden. Die Anbindung der Zug-Druckstäbe 3a, 3b an den Antriebsring 1 und an den Rahmen 4 erfolgt mittels sogenannter Festkörpergelenke 5. Festkörpergelenke ermöglichen, wie gewöhnliche Gelenke (allerdings nur innerhalb eines begrenzten Winkelbereiches) eine nahezu ungehinderte Rotation der angeschlossenen Elemente relativ zueinander. Ihre Funktion basiert auf dem Biegeprinzip. Erreicht wird die lokale Biegung durch eine gezielte Verringerung des Stabquerschnittes in einem kurzen Abschnitt. Der reduzierte Stabquerschnitt führt zu einer stark reduzierten Biegesteifigkeit. Da die Querschnittsverjüngung sehr lokalisiert ist, wird die axiale Federrate (Steifigkeit) des jeweiligen Stabes aber kaum verringert.

Die paarweise in etwa parallel zueinander, und parallel zur x-Achse verlaufende Anordnung der Stabelemente 3a, 3b in Kombination mit ihrer Anbindung an den mechanisch hinreichend steifen Antriebsring 1 und an den mechanisch hinreichend steifen Rahmen 4, jeweils durch Festkörpergelenke 5, hat zur Folge, dass der Antriebsring 1 relativ leicht (d. h. nahezu kräftefrei) relativ zum Rahmen 4 in Form einer Scherung in y-Richtung verschoben werden kann (die Auslenkungen bewegen sich im Bereich von nur ca. hundert Mikrometer). Einer Torsion des Antriebsringes 1 und einer Verschiebung des Ringes in x-Richtung relativ zum Rahmen 4 setzt diese Struktur jedoch, wie erwünscht, sehr hohen Widerstand entgegen.

Der Rahmen 4 ist mittels zweier in etwa parallel zueinander verlaufender und in ihrer Längserstreckung in etwa parallel zur y-Richtung ausgerichteter U-Schenkel (Zug-Druckstäbe) 6a, 6b mit einem mechanisch hinreichend steifen U-Basiselement 7 verbunden. Die U-Schenkel 6a, 6b bilden zusammen mit dem U-Basiselement 7 einen U-förmigen Außenrahmen 6 für den Rahmen 4. Das Basiselement 7 ist starr an ein Fixierelement 8 gekoppelt. Die Anbindung der mechanisch steifen U-Schenkel (Zug-Druckstäbe) 6a, 6b an den Rahmen 4 und an das Basiselement 7 erfolgt ebenfalls über Festkörpergelenke 9.

Die paarweise zueinander, und zur y-Achse in etwa parallele Anordnung der U-Schenkel 6a, 6b in Kombination mit ihrer Anbindung an den mechanisch hinreichend steifen Rahmen 4 und an das mechanisch hinreichend steife Basiselement 7 durch Festkörpergelenke 9 hat zur Folge, dass der Rahmen 4 relativ leicht (d. h. nahezu kräftefrei) relativ zum Basiselement 7 bzw. relativ zum Fixierelement 8 in Form einer Scherung in x-Richtung verschoben werden kann. Einer Torsion des Rahmens 4 und einer Verschiebung des Rahmens in y-Richtung relativ zum Basiselement 7 bzw. relativ zum Fixierelement 8 setzt diese Struktur den erforderlichen sehr hohen Widerstand entgegen.

Als Konsequenz aus der Struktur der Anbindung des Antriebsringes 1 an den Rahmen 4 und der Struktur der Anbindung des Rahmens 4 an das Fixierelement 8 via dem Basiselement 7 ist der Antriebsring 1 relativ zum Fixierelement 8 in der x-y-Ebene nahezu kräftefrei in jede Richtung beliebig verschiebbar, aber torsionssteif gelagert. Die Gesamtstruktur wird hier als 'Rahmenkinematik' bezeichnet. Jedes am Antriebsring 1 angreifende Drehmoment wird durch die Rahmenkinematik an das Fixierelement 8 übertragen, ohne dass dabei der Ring 1 nennenswert rotiert wird.

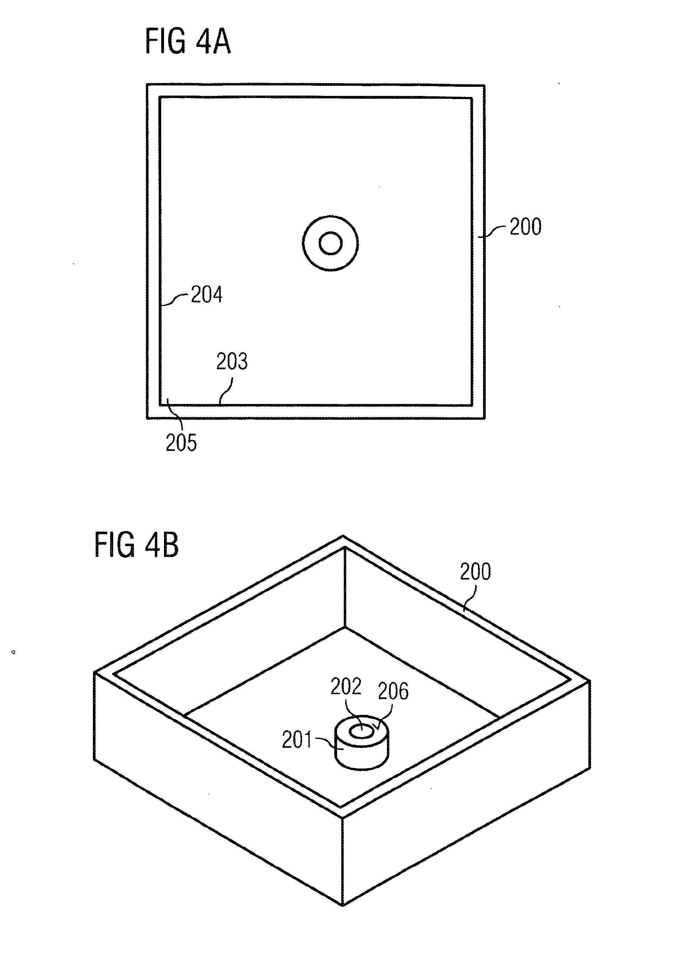

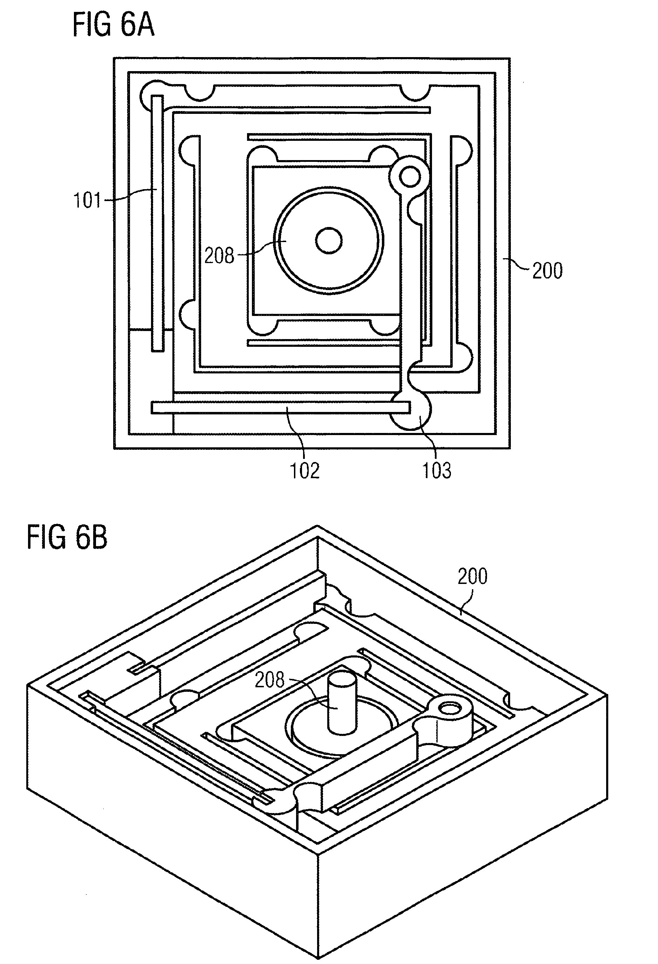

Infolgedessen muss erfindungsgemäß nicht mehr auf die radiale Krafteinleitung der durch die Biegeaktoren 101, 102 bereitgestellten Kräfte in den Antriebsring 1 bezüglich des Mittelpunktes der Ringbohrung 2 geachtet werden, da das durch eine mehr oder weniger exzentrische nichtradiale Krafteinleitung hervorgerufene Drehmoment auf den Antriebsring 1 durch die Rahmenkinematik und das Fixierelement 8, das im Schrittantrieb starr in dessen Gehäuse (vgl. im Folgenden Figuren 4 und 6) verankert ist, torsionsfrei aufgenommen wird.

Wie Figur 1 weiterhin zeigt, enthält das Fixierelement 8 Aufnahmen 10a, lOb zur torsionssteifen Befestigung von streifenförmigen elektromechanischen (beispielsweise piezoelektrischen) Biegeaktoren, vgl. Figur 2. Im Fixierelement 8 können hier nicht gezeigte Maßnahmen vorgesehen sein, um die Biegeaktoren an ihrem ruhenden Ende elektrisch zu kontaktieren (z.B. Druckkontaktstifte, Klemmkontakte, Bügelfederkontakte etc.). Alternativ können die Biegeaktoren auch im bewegten Bereich bzw. an ihrem entgegengesetzten bewegten Ende elektrisch angeschlossen sein.

Zur Aufnahme des bewegten Endes 101a, vgl. Figur 2A, des in die Aufnahme 10b des Fixierelementes 8 einzusetzenden Biegeaktors 101 ist ein geeigneter Aufnahmekörper 11 vorgesehen, der über einen starren Zug-Druckstab 12 und zwei Festkörpergelenke 13 in etwa an der rechten oberen Ecke 14 des Rahmens 4 befestigt ist.

Der Antriebsring 1 enthält z. B. ein oder zwei Zapfen 15 zur starren Befestigung von ein bzw. zwei Bügelelementen, die im Folgenden (Figuren 2 und 3) näher beschrieben werden.

Im Übrigen ist das erfindungsgemäße Antriebsmodul in Figur 1 nur in einer beispielhaften Konfiguration dargestellt. Bei weiterhin paralleler Anordnung des Basiselements 7 zur x-Achse könnte z. B. der U-förmige Außenrahmen 6 den Rahmen 4 von oben her in Form eines umgedrehten U umfassen und/oder der Antriebsring 1 könnte am Rahmenelement 4b statt 4d angebunden sein.

Figur 2 zeigt das Antriebsmodul mit eingesetzten Biegeaktoren 101, 102 und Bügelelementen 103 in der Draufsicht (Figur 2A) und perspektivisch (Figur 2B). Der Biegeaktor 101 lenkt sich bei elektrischer Ansteuerung in x-Richtung aus bzw. erzeugt bei Widerstand eine Kraft in x-Richtung. Diese Bewegung bzw. Kraft wird mechanisch steif durch den Zug-Druckstab 12 auf den starren Rahmen 4 übertragen. Da der Rahmen 4 bezüglich der x-Richtung mechanisch steif an den Antriebsring 1 gekoppelt ist, bewegt der Biegeaktor 101 den Antriebsring 1 in x-Richtung, bzw. übt eine Kraft in x-Richtung auf ihn aus. Der Biegeaktor 102 lenkt sich bei elektrischer Ansteuerung in y-Richtung aus bzw. erzeugt bei Widerstand eine Kraft in y-Richtung. Diese Bewegung bzw. Kraft wird mechanisch steif durch den Zug-Druckstab 16 des Bügels 103 auf den starren Antriebsring 1 übertragen. Die Anbindung der Zug-Druckstäbe 12 und 16 an die Aufnahmekörper 11 und 17 und an den Rahmen 4 bzw. an das Gegenstück 18 und darüber an den Antriebsring 1 mittels Festkörpergelenken 13 und 19 bewirkt, dass die Biegeaktoren 101, 102 völlig unabhängig voneinander wirken und sich nicht gegenseitig beeinflussen können, also insbesondere nicht gegen die vergleichsweise hohe mechanische Steifigkeit des jeweils anderen Biegewandlers arbeiten müssen. Die Bewegungen der Biegewandler 101, 102 sind also entkoppelt.

Wird ein Biegeaktor 101, 102 elektrisch angesteuert, so biegt er sich näherungsweise in Form eines Kreisbogens, wodurch sich die Tangentensteigung der Biegelinie am bewegten Ende des Biegeaktors ändert. Diese Art der 'Drehbewegung' wird durch die Festkörpergelenke 13, 19 sicher abgefangen. Ebenso wird eine Änderung der Biegerlänge relativ zum Antriebsmodul (z.B. durch unterschiedliche thermische Dehnung der Rahmenkinematik und des Biegermaterials) durch die Zug- Druckstabkopplung 12 und 16 mit Festkörpergelenken 13 und 19 sicher abgefangen, indem die Stäbe 12, 16 minimal rotiert werden, ohne dass hierdurch deren Kraft- bzw. Wegübertragungsfunktion beeinträchtigt wird.

Zusammenfassend ist festzuhalten, dass die Biegeaktoren 101 und 102 den Antriebsring 1 völlig unabhängig voneinander in x- bzw. y-Richtung relativ zum Fixierelement 8 bewegen. Eine Ringtorsion wird durch die Rahmenkinematik unterbunden.

Figur 3 zeigt ein geeignetes Bügelelement 103. Das Bügelelement 103 besteht aus einem Zug-Druckstab 16, einem Aufnahmekörper 17 zur Befestigung des bewegten Endes 101a eines Biegeaktors 101, 102, und einem Gegenstück 18 zum Zapfen 15 zur starren Befestigung des Bügelelementes 103 am Antriebsring 1 (z.B. durch Pressen, Kleben etc.). Der Aufnahmekörper 17 und das Gegenstück 18 sind mit dem Zug-Druckstab 16 über Festkörpergelenke 19 verbunden. Es können ein oder, aus Symmetriegründen, zwei Bügelelemente 103 eingesetzt werden, vgl. die Ausführungsform gemäß Figur 2B mit je einem Bügelelement 103 auf der Vorder- und Rückseite des Antriebsmoduls.

Zur Realisierung des mit dem Antriebsmodul verbundenen rahmenkinematischen Prinzips im Schrittmotor sind des Weiteren eine Welle und eine möglichst spielfreie, aber drehbare Lagerung derselben, sowie eine steife Lagerung des Antriebsmoduls erforderlich:
Figur 4 zeigt ein hierfür geeignetes näherungsweise quaderförmiges Gehäuse 200 in der Draufsicht (Figur 4A) und in perspektivischer Ansicht (Figur 4B). Es enthält einen zentralen Lagerblock 201 mit einer zylindrischen Gleitlagerbohrung 202, die - nach dem weiteren Zusammenbau - mit der zylindrischen Gleitfläche einer in ihr rotierenden Welle in Form einer engen Spielpassung gepaart ist. Die Kantenlängen zweier benachbarter Innenkanten, beispielsweise der Innenkanten 203, 204 und die Lage der Achse der Lagerbohrung 202 sind so bemessen, dass bei einer (steifen und dauerfesten) Fixierung des Fixierelementes 8, z. B. in der Gehäuseecke 205, die Achse der Ringbohrung 2 des Antriebsringes 1 sich kongruent zur Achse der Lagerbohrung 202 einstellt. Die Anlagefläche 206 des Lagerblocks 201 ist derart lokalisiert, dass die Abrollfläche der Welle in z-Richtung (senkrecht zur Blattebene) in einer Höhe zu liegen kommt, die zur z-Position der Ringbohrung 2 korrespondiert, so dass die Welle bei geeigneter Ansteuerung der Biegeaktoren 101, 102 in der zylindrischen Innenfläche 1a, vgl. Figur 1B, der Ringbohrung 2 abrollen kann.

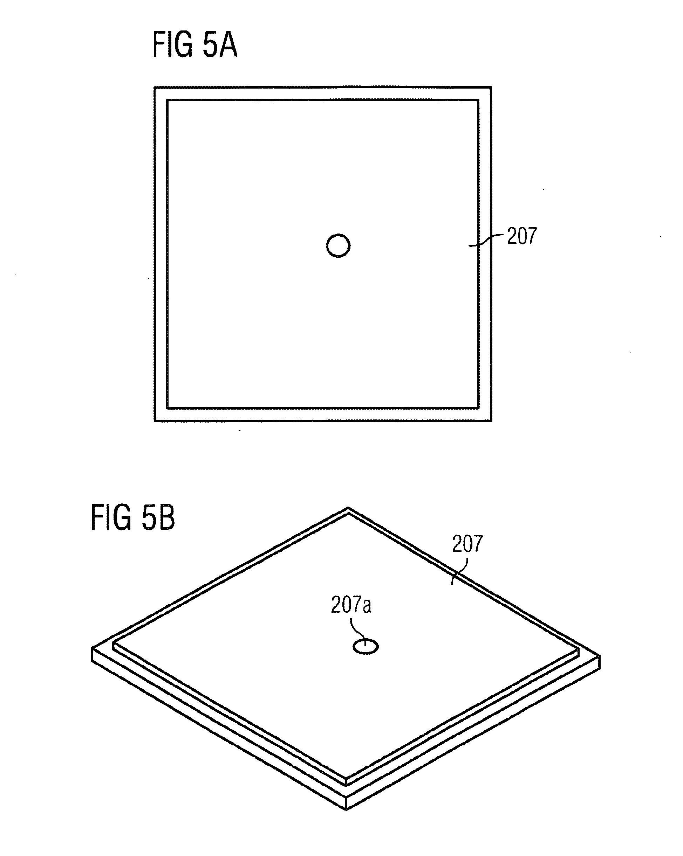

Figur 5 zeigt einen zum Gehäuse 200 passenden Deckel 207 mit einer zweiten Lagerbohrung 207a, die, wie hier dargestellt, als Durchgangsbohrung oder alternativ, aus Gründen der vereinfachten Kapselung gegenüber Medien oder Feuchte, als Sacklochbohrung ausgeführt sein kann, die zu einer zweiten zylindrischen Gleitfläche der Welle in Form einer drehbaren, aber engen Spielpassung gepaart ist, deren Bohrungsachse bei in das Gehäuse 200 eingesetztem Deckel 207 kongruent zur Achse der Ringbohrung 2 und der Achse der ersten Lagerbohrung 202 im Gehäuse 200 zu liegen kommt.
Figur 6 zeigt einen Teilzusammenbau des erfindungsgemäßen Schrittantriebs mit im Gehäuse 200 montierten Antriebsmodul, eingesetzten Biegeaktoren 101, 102, eingesetzter Welle 208 und eingesetzten Bügelelementen 103.

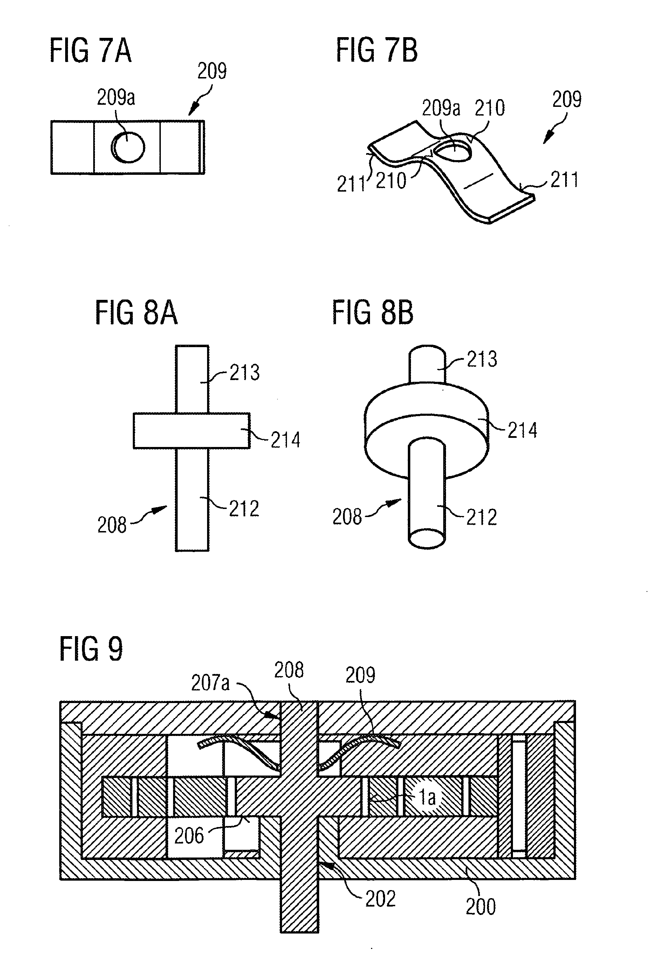

Figur 7 zeigt eine geeignete Bügelfeder 209. Die Bügelfeder 209 enthält eine Bohrung 209a zum Durchtritt der Wellenachse, wodurch sichergestellt wird, dass sie im Betrieb nicht 'Auswandern' kann. Die Bügelfeder 209 stützt sich über Flächen 210 nahe der Bohrungsachse in Form einer Berührungslinie auf der Welle 208 ab, um ein durch Reibung erzeugtes Bremsdrehmoment auf die Welle 208 möglichst klein zu halten. Die weit außenliegenden unteren Flächen 211 dienen zur Abstützung der Bügelfeder 209 auf einer Deckelfläche. Die montierte Bügelfeder 209, vgl. auch Figur 9, stützt sich einerseits auf der Welle 208 und andererseits bei eingesetztem Deckel 207 auf einer Fläche des Deckels 207 mit hinreichender, aber geringer Kraft ab, um die Welle 208 auf Anlage mit der Anlagefläche 206 des Lagerblocks 201 zu halten, ohne aber nennenswerte Reibungskräfte, die die Drehung der Welle 208 behindern zu verursachen. Auf diese Weise wird sichergestellt, dass die Abrollflächen von Antriebsring 1 und Welle 208 unter allen Betriebsbedingungen hinreichend genau in z-Richtung zueinander lokalisiert bleiben.
Figur 8 zeigt eine geeignete Welle 208. Sie besitzt zwei zylindrische Gleitlagerflächen 212, 213, die mit den zylindrischen Innenflächen der Lagerbohrungen 202, 207a gepaart sind, und mindestens eine zylindrische Abrollfläche 214, die mit mindestens einer Abrollfläche 1a der Ringbohrung 2, vgl. Figur 1B, gepaart ist. Hierbei dient die axiale Verlängerung der Fläche 212 zum Anschluss des jeweiligen, vom Schrittmotor anzutreibenden Elementes.
Figur 9 zeigt einen axialen Querschnitt entlang der z-Achse durch den erfindungsgemäßen Antrieb im zusammengebauten Zustand. Sie zeigt insbesondere die Lage seiner Bestandteile zueinander. Die Welle 208 ist an zwei Stellen in Form enger Spielpassungen anhand der Gleitflächenpaare 207a, 213 und 202, 212 um die z-Achse reibungsarm drehbar, aber mechanisch steif gegenüber Translation gelagert. Eine geeignete Bügelfeder 209 hält im Zusammenwirken mit der Anlagefläche 206 die Welle 208 bezüglich der z-Richtung reibungsarm fixiert. Das Antriebsmodul hält im Ruhezustand die Abrollfläche 1a der Ringbohrung 2 sowohl konzentrisch, als auch in z-Richtung in geeigneter Lage relativ zur Abrollfläche 214 der Welle 208.

Mit Hilfe geeigneter elektrischer Ansteuerfunktionen vollziehen die Biegeaktoren 101, 102 jeweils an ihrem bewegten Ende 101a Auslenkungen mit sinus- bzw. kosinusförmigen zeitlichem Verlauf um die Ruhelage, wodurch die Abrollfläche 1a der Ringbohrung 2 auf Anlage mit der Abrollfläche 214 der Welle 208 gehalten und in Form einer kreisförmigen Verschiebebewegung um die Abrollfläche 214 der Welle 208 bewegt wird und dadurch die Welle 208 in Rotation versetzt. Mittels der relativen Phasenlage der x- bzw. y-Auslenkungen des Antriebsringes 1 wird die Drehrichtung festgelegt und mit Hilfe der Steuerfrequenz die Drehgeschwindigkeit.

Im einfachsten Fall erfolgt die Kraftübertragung vom Antriebsring 1 auf die Welle 208 durch Reibung. Dabei kann es in Abhängigkeit vom auf die Welle 208 wirkenden Lastdrehmoment eines derartig aufgebauten Stellantriebs zu Schlupf kommen, wodurch die Genauigkeit des Stellantriebs reduziert wird. Der Schlupf wird vorzugsweise durch die Einführung eines Formschlusses zwischen den Abrollflächen von Antriebsring 1 und Welle 208 verringert, insbesondere indem auf die Innenfläche 1a des Antriebsrings 1 und auf die Außenfläche 214 der Welle 208 eine Verzahnung aufgebracht wird. Dabei weisen Antriebsring 1 und Welle 208 vorzugsweise eine Zahndifferenz von mindestens eins auf. Das bedeutet, dass die Verzahnung der Innenfläche des Antriebsrings 1 mindestens einen Zahn mehr als die Außenfläche 214 der Welle 208 umfasst. Werden Antriebsring 1 und Welle 208 innerhalb des Stellantriebs derart betrieben, dass die Verzahnung nicht außer Eingriff gerät, arbeitet der Stellantrieb idealerweise schlupffrei.

Als besonders bevorzugt wird eine zykloidische Verzahnung von Antriebsring 1 und Welle 208 angesehen. Bei der zykloidischen Verzahnung ist nahezu die Hälfte aller Zähne im Eingriff, wodurch ein hohes Drehmoment zwischen Antriebsring 1 und Welle 208 übertragbar ist. Über die Anzahl der auf der Innenfläche 1a des Antriebsrings 1 und der Außenfläche 214 der Welle 208 befindlichen Zähne ist zunächst eine Untersetzung des Stellantriebs festgelegt, die typischerweise in einem Bereich von 20:1 bis 200:1 liegt. Um den Stellantrieb um nur einen Zahn weiter zu stellen, das heißt die Welle 208 durch den Antriebsring 1 um einen Zahn weiter zu drehen, muss vorzugsweise eine vollständige Periode des ansteuernden Sinussignals des Stellantriebs durchlaufen werden. Da zum Weiterstellen um einen Zahn ein Zyklus des Ansteuersignals durchlaufen werden muss, zeichnet sich der Stellantrieb durch eine hohe Genauigkeit und durch eine hohe Wiederholgenauigkeit aus. Zudem wird über die Anzahl der Zähne und die Nutzung von einem Zyklus des Ansteuersignals pro Zahn eine hohe Winkelauflösung des Stellantriebs realisiert. Ergänzend dazu kann beliebig innerhalb einer Periode des Ansteuersignals interpoliert werden, um einen Mikroschrittbetrieb des Stellantriebs zu gewährleisten. Somit liefert der Stellantrieb gemäß bevorzugter Konstruktionen eine hohe Effizienz, eine hohe Untersetzung, ein hohes übertragbares Drehmoment basierend auf der Verzahnung von Antriebsring 1 und Welle 208, Schlupffreiheit bei der Übertragung des Drehmoments, eine beliebige Interpolation des Drehwinkels innerhalb eines Zahns der Welle 208 (Mikroschrittbetrieb), geringe Antriebsdrehmomentschwankungen (Ripple) und eine niedrige Zahnflankenbelastung für Antriebsring 1 und Welle 208, so dass ebenfalls der Verschleiß reduziert wird.

## Patentansprüche

1. Elektromechanischer Motor, insbesondere piezoelektrischer Mikroschrittantrieb, aufweisend:
- zwei elektromechanische Antriebselemente (101, 102), die annähernd senkrecht zueinander ausgerichtete Wirkrichtungen aufweisen,
- eine in einem Antriebsring (1) derart drehbar gelagerte Welle (208), dass der Antriebsring (1) durch eine Auslenkung der elektromechanischen Antriebselemente (101, 102) in die jeweilige Wirkrichtung zu einer unmittelbar auf die Welle (208) übertragbaren Verschiebebewegung anregbar ist, so dass die Welle (208) im Antriebsring (1) abrollt und **dadurch** rotiert, während
- ein annähernd rechtwinkliger steifer Rahmen (4) und ein den Rahmen (4) U-förmig umfassender Außenrahmen (6) mit U-Schenkeln (6a, 6b) und mit einem annähernd parallel zu einer der beiden Wirkrichtungen angeordneten Basiselement (7) vorgesehen sind, so dass der mit den Enden der U-Schenkel (6a, 6b) verbundene Rahmen (4) nahezu kräftefrei relativ zum Basiselement (7) in Form einer Scherung in die zum Basiselement (7) parallele Wirkrichtung verschiebbar ist, und
- der innerhalb des Rahmens (4) angeordnete und über annähernd parallel zum Basiselement (7) angeordnete Stabelemente (3a, 3b) an den Rahmen (4) angebundene Antriebsring (1) relativ zum Rahmen (4) in Form einer Scherung in die zum Basiselement (7) senkrechte Wirkrichtung verschiebbar ist,
- wobei das zur parallelen Wirkrichtung gehörige Antriebselement (101) an den Rahmen (4) und das zur senkrechten Wirkrichtung gehörige Antriebselement (102) an den Antriebsring (1) angelenkt ist.

2. Elektromechanischer Motor nach Anspruch 1, bei dem die U-Schenkel (6a, 6b) des Außenrahmens (6) jeweils mittels Festkörpergelenken (9) an das Basiselement (7) und an den Rahmen (4) angebunden sind, und bei dem die Stabelemente (3a, 3b) jeweils mittels Festkörpergelenken (5) an den Antriebsring (1) und an eines der beiden senkrecht zum Basiselement (7) angeordneten Rahmenelemente (4b, 4d) des Rahmens (4) angebunden sind.

3. Elektromechanischer Motor nach Anspruch 2, bei dem die Festkörpergelenke (5, 9) jeweils durch eine Querschnittsverjüngung der Stabelemente (3a, 3b) und der U-Schenkel (6a, 6b) des Außenrahmens (6) in einem kurzen Abschnitt gebildet sind.

4. Elektromechanischer Motor nach einem der Ansprüche 1 bis 3, bei dem am Antriebsring (1) mindestens ein Zapfen (15) zur starren Befestigung jeweils eines senkrecht zum Basiselement (7) angeordneten Bügelelements (103) integriert ist, wobei am entgegengesetzten Ende (17) des Bügelelements (103) das zur senkrechten Wirkrichtung gehörige Antriebselement (102) angreift.

5. Elektromechanischer Motor nach einem der Ansprüche 2 bis 4, bei dem die Anbindung des Endes eines der beiden U-Schenkel (6a, 6b) des Außenrahmens (6) an den Rahmen (4) als Rahmenecke (14) ausgebildet ist, an die ein Zug-Druckstab (12) angebunden ist, der außerhalb und parallel zu dem die Enden der U-Schenkel (6a, 6b) verbindenden Rahmenelement (4a) angeordnet ist und sich mit seinem freien Ende bis über das zur Rahmenecke (14) entgegengesetzte Ende des Rahmenelements (4a) hinaus erstreckt, wobei am freien Ende des Zug-Druckstabs (12) das zur parallelen Wirkrichtung gehörige Antriebselement (101) angreift.

6. Elektromechanischer Motor nach Anspruch 4 oder 5, bei dem der Zug-Druckstab (12) und / oder das Bügelelement (103) jeweils zu jedem ihren beiden Enden hin ein Festkörpergelenk (13, 19) aufweisen.

7. Elektromechanischer Motor nach einem der Ansprüche 1 bis 6, dessen zwei elektromechanische Antriebselemente (101, 102) Biegewandler, vorzugsweise piezoelektrische Biegewandler, sind.

8. Elektromechanischer Motor nach Anspruch 7, bei dem das Basiselement (7) des Außenrahmens (6) an einem seiner Endbereiche starr an ein in einem Gehäuse (200) fixierbares Fixierelement (8) gekoppelt ist, das zwei Aufnahmen (10a, 10b) aufweist, die jeweils zur steifen Befestigung eines Biegewandlers (101, 102) an seinem ruhenden Ende vorgesehen sind, so dass je ein Biegewandler (101, 102) seitlich außerhalb des Basiselements (7) bzw. eines der U-Schenkel (6a, 6b) des Außenrahmens (6) angeordnet ist.

9. Elektromechanischer Motor nach Anspruch 8, bei dem der Rahmen (4) mit Antriebsring (1), der Außenrahmen (6) und das Fixierelement (8) ein einstückig in Kunststoffspritzgusstechnik gefertigtes Antriebsmodul bilden, wobei die Biegewandler (101, 102) mit in das Antriebsmodul eingespritzt sind.

10. Elektromechanischer Motor nach einem der Ansprüche 1 bis 9, bei dem ein annähernd quaderförmiges Gehäuse (200) mit einem Deckel (207) vorgesehen ist, wobei im Gehäuse (200) ein zentraler Lagerblock (201) mit einer Anlagefläche (206) und mit einer ersten Lagerbohrung (202) und im Deckel (207) eine zweite Lagerbohrung (207a) für die Welle (208) vorgesehen ist, und wobei ein zur Fixierung vorgesehenes, starr am Basiselement (7) angekoppeltes Fixierelement (8) derart in einer Gehäuseecke (205) angeordnet und steif und dauerfest fixiert ist, dass die mindestens eine zylindrische Abrollfläche (214) der Welle (208) in einer zugehörigen Abrollfläche (1a) einer Ringbohrung (2) des Antriebsringes (1) abrollen kann.

11. Elektromechanischer Motor nach Anspruch 10, bei dem die Welle (208) mit einem scheibenförmigen Mittelstück ausgebildet ist, dessen erste ringförmige Stirnfläche auf dem Lagerblock (201) aufliegt und dessen Mantelfläche die zylindrische Abrollfläche (214) der Welle (208) bildet.

12. Elektromechanischer Motor nach Anspruch 11, bei dem zur Sicherstellung der Fixierung in z-Richtung der Achse der Welle (208) eine mit einer Bohrung (209a) zum Durchtritt der Welle (208) versehene Bügelfeder (209) vorgesehen ist, die sich einerseits auf der zweiten ringförmigen Stirnfläche des scheibenförmigen Mittelstücks der Welle (208) und andererseits bei aufgesetztem Deckel (207) auf einer Fläche des Deckels (207) so abstützt, dass die Drehung der Welle (208) nicht nennenswert behindert wird.

## Claims

1. Electromechanical motor, especially a piezoelectric microstepper drive, exhibiting:
- two electromechanical drive elements (101, 102) which exhibit effective directions aligned approximately perpendicularly to one another,
- a shaft (208) supported rotatably in a drive ring (1) in such a manner that the drive ring (1) can be activated by a deflection of the electromechanical drive elements (101, 102) into the respective effective direction to perform a displacement movement which can be transmitted directly to the shaft (208), in such a manner that the shaft (208) rolls in the drive ring (1) and as a result rotates, whilst
- an approximately rectangular stiff frame (4) and an outer frame (6), enclosing the frame (4) in a U-shape, with U-legs (6a, 6b) and with a basic element (7) arranged approximately in parallel with one of the two effective directions, are provided so that the frame (4) connected to the ends of the U-legs (6a, 6b) can be displaced in the effective direction parallel to the basic element (7) in the form of a shearing almost free from forces relative to the basic element (7), and
- the drive ring (1) arranged within the frame (4) and linked to the frame (4) via rod elements (3a, 3b) arranged approximately in parallel with the basic element (7) can be displaced in the effective direction perpendicular to the basic element (7) in the form of a shearing relative to the frame (4),
- the drive element (101) belonging to the parallel effective direction being hinged to the frame (4) and the drive element (102) belonging to the perpendicular effective direction being hinged to the drive ring (1).

2. Electromechanical motor according to Claim 1, in which the U-legs (6a, 6b) of the outer frame (6) are in each case linked to the basic element (7) and to the frame (4) by means of flexure hinges (9), and in which the rod elements (3a, 3b) are in each case linked to the drive ring (1) and to one of the two frame elements (4b, 4d), arranged perpendicularly to the basic element (7), of the frame (4), by means of flexure hinges (5).

3. Electromechanical motor according to Claim 2, in which the flexure hinges (5, 9) are in each case formed by a cross-sectional tapering of the rod elements (3a, 3b) and of the U-legs (6a, 6b) of the outer frame (6) in a short section.

4. Electromechanical motor according to one of Claims 1 to 3 in which at least one peg (15) is integrated at the drive ring (1) for rigidly securing in each case one yoke element (103) arranged perpendicularly to the basic element (7), the drive element (102) belonging to the perpendicular effective direction engaging the opposite end (17) of the yoke element (103).

5. Electromechanical motor according to one of Claims 2 to 4 in which the linking of the end of one of the two U-legs (6a, 6b) of the outer frame (6) to the frame (4) is constructed as frame corner (14) to which a compression-tension rod (12) is linked which is arranged outside and in parallel with the frame element (4a) connecting the ends of the U-legs (6a, 6b) and extends with its free end over the end of the frame element (4a) opposite to the frame corner (14), the drive element (101) belonging to the parallel effective direction engaging the free end of the compression-tension rod (12).

6. Electromechanical motor according to Claim 4 or 5 in which the compression-tension rod (12) and/or the yoke element (103) in each case exhibit a flexure hinge (13, 19) towards each of their two ends.

7. Electromechanical motor according to one of Claims 1 to 6, the two electromechanical drive elements (101, 102) of which are bending actuators, preferably piezoelectric bending actuators.

8. Electromechanical motor according to Claim 7 in which the basic element (7) of the outer frame (6) is coupled at one of its end areas rigidly to a fixing element (8), which can be fixed in a housing (200), which exhibits two receptacles (10a, 10b) which are in each case provided for rigidly securing a bending actuator (101, 102) at its resting end so that in each case one bending actuator (101, 102) is arranged laterally outside the basic element (7) or, respectively, one of the U-legs (6a, 6b) of the outer frame (6).

9. Electromechanical motor according to Claim 8, in which the frame (4) with drive ring (1), the outer frame (6) and the fixing element (8) form a drive module fabricated in one piece in plastic injection-molding technique, the bending actuators (101, 102) also being injected into the drive module.

10. Electromechanical motor according to one of Claims 1 to 9, in which an approximately cuboidal housing (200) with a lid (207) is provided, a central bearing block (201) with a support surface (206) and with a first bearing bore (202) being provided in the housing (200) and a second bearing bore (207a) for the shaft (208) being provided in the lid (207) and a fixing element (8), which is provided for fixing and is rigidly coupled to the base element (7), being arranged in a housing corner (205) and stiffly and permanently fixed in such a manner that the at least one cylindrical rolling area (214) of the shaft (208) can roll in an associated rolling area (1a) of an annular bore (2) of the drive ring (1).

11. Electromechanical motor according to Claim 10, in which the shaft (208) is constructed with a disk-shaped centerpiece, the first annular front face of which rests on the bearing block (201) and the surface area of which forms the cylindrical rolling area (214) of the shaft (208).

12. Electromechanical motor according to Claim 11, in which, to secure the fixing in the z direction of the axis of the shaft (208), a yoke spring (209) provided with a hole (209a) for the passage of the shaft (208) is provided which is supported, on the one hand, on the second annular front face of the disk-shaped centerpiece of the shaft (208) and, on the other hand, with the lid (207) in place, on an area of the lid (207) in such a manner that the rotation of the shaft (208) is not significantly impeded.

## Revendications

1. Moteur électromécanique, notamment micro-servomoteur pas à pas piézoélectrique, comportant:
- deux organes électromécaniques de commande (101, 102) qui ont des directions effectives de travail approximativement perpendiculaires l'une par rapport à l'autre,
- un arbre (208) monté en rotation dans une bague de commande (1) de manière telle que la bague de commande (1) est sollicitée, par un déplacement des organes électromécaniques de commande (101, 102) dans leur direction respective de travail, à exécuter un glissement transmis directement sur l'arbre (208), si bien que l'arbre (208) pivote dans la bague de commande et, de cette façon, tourne, alors que
- il est prévu un cadre (4) rigide approximativement rectangulaire et un cadre extérieur (6), qui entoure en forme de U le cadre (4) avec des branches en U (6a, 6b) et un élément de base placé approximativement parallèlement à l'une des deux directions effectives de travail, si bien que le cadre (4) lié aux extrémités des branches en U (6a, 6b) peut se déplacer, pratiquement en inertie par rapport à l'élément de base (7), sous forme de cisaillement dans la direction de travail parallèle à l'élément de base (7), et
- la bague de commande (1), disposée à l'intérieur du cadre (4) et liée au cadre (4) par l'intermédiaire de barres (3a, 3b) placées approximativement parallèlement à l'élément de base (7), peut se déplacer par rapport au cadre (4) sous forme de cisaillement dans la direction de travail perpendiculaire à l'élément de base (7),
- l'organe de commande (101), qui correspond à la direction parallèle de travail, étant articulé sur le cadre (4) et l'organe de commande (102), qui correspond à la direction perpendiculaire de travail, étant articulé sur la bague de commande (1).

2. Moteur électromécanique selon la revendication 1, dans lequel les branches en U (6a, 6b) du cadre extérieur (6) sont liées chacune au moyen d'articulations à corps solide (9) à l'élément de base (7) et au cadre (4) et dans lequel les barres (3a, 3b) sont liées chacune au moyen d'articulations à corps solide (5) à la bague de commande (1) et à l'un des deux éléments de cadre (4b, 4d) du cadre (4) placés perpendiculairement à l'élément de base (7).

3. Moteur électromécanique selon la revendication 2, dans lequel les articulations à corps solide (5, 9) sont formées chacune par un amincissement de la section transversale des barres (3a, 3b) et des branches en U (6a, 6b) du cadre extérieur (6) sur une courte section.

4. Moteur électromécanique selon l'une des revendications 1 à 3, dans lequel au moins un tourillon (15) permettant de fixer d'une façon rigide une bride correspondante (103) disposée perpendiculairement à l'élément de base (7) est intégré à la bague de commande (1), l'organe de commande (102) correspondant à la direction perpendiculaire de travail ayant son point d'attaque à l'extrémité opposée (17) de la bride (103).

5. Moteur électromécanique selon l'une des revendications 2 à 4, dans lequel la liaison de l'extrémité de l'une des deux branches en U (6a, 6b) du cadre extérieur (6) au cadre (4) est réalisée sous forme de coin de cadre (14) auquel est fixée une tige de traction-compression (12), laquelle est placée à l'extérieur et parallèlement à l'élément de cadre (4a) liant les extrémités des branches en U (6a, 6b) et dont l'extrémité libre s'étend au-delà de l'extrémité de l'élément de cadre (4a) opposé au coin de cadre (14), alors que l'organe de commande (101) correspondant à la direction parallèle de travail a son point d'attaque à l'extrémité libre de la tige de traction-compression (12).

6. Moteur électromécanique selon la revendication 4 ou 5, dans lequel la tige de traction-compression (12) et/ou la bride (103) comportent chacune, à chacune de leurs deux extrémités, une articulation (13, 19) à corps solide.

7. Moteur électromécanique selon l'une des revendications 1 à 6, où les deux organes électromécaniques de commande (101, 102) sont des convertisseurs à flexion, de préférence des convertisseurs piézoélectriques à flexion.

8. Moteur électromécanique selon la revendication 7, dans lequel l'élément de base (7) du cadre extérieur (6) est couplé d'une façon rigide, à l'une de ses extrémités, à un organe de fixation (8) pouvant être fixé dans un boîtier (200) et comportant deux logements (10a, 10b) prévus chacun pour la fixation rigide d'un convertisseur à flexion (101, 102) à son extrémité immobile, de manière telle que chaque convertisseur à flexion (101, 102) est placé latéralement à l'extérieur de l'élément de base (7) ou de l'une des branches en U (6a, 6b) du cadre extérieur (6).

9. Moteur électromécanique selon la revendication 8, dans lequel le cadre (4) y compris la bague de commande (1), le cadre extérieur (6) et l'organe de fixation (8) forment un module de commande fabriqué en une seule pièce par moulage à injection de matière plastique, le convertisseur à flexion (101, 102) étant intégré par injection dans le module de commande.

10. Moteur électromécanique selon l'une des revendications 1 à 9, dans lequel il est prévu un boîtier (200) approximativement parallélépipédique avec un couvercle (207), où il est prévu, dans le boîtier (200), un bloc support (201) central avec une surface d'appui (206) et un premier alésage (202) formant palier et, dans le couvercle (207), un deuxième alésage (207a) formant palier pour l'arbre (208) et où un organe de fixation (8), prévu pour la fixation et couplé d'une façon rigide sur l'élément de base (7), est placé dans un coin (205) du boîtier et est fixé d'une façon rigide et durable de manière telle que la au moins une surface cylindrique de roulement (214) de l'arbre (208) peut rouler sur une surface correspondante de roulement (1a) d'un alésage formant palier (2) de la bague de commande (1).

11. Moteur électromécanique selon la revendication 10, dans lequel l'arbre (208) est conçu avec une partie centrale en forme de disque, dont la première surface annulaire de tranche est appliquée sur le bloc support (201) et dont la surface latérale forme la surface de roulement (214) de l'arbre (208).

12. Moteur électromécanique selon la revendication 11, dans lequel, pour garantir la fixation dans la direction z de l'axe de l'arbre (208), il est prévu un ressort en étrier (209) doté d'un alésage (209a) pour la traversée de l'arbre (208), ledit ressort s'appuyant, d'une part, sur la deuxième surface annulaire de tranche de la partie centrale en forme de disque de l'arbre (208) et, d'autre part, lorsque le couvercle (207) est en place, sur une surface du couvercle (207) de manière telle que la rotation de l'arbre (208) n'est pas sensiblement gênée.
